# EUROPÄISCHE PATENTSCHRIFT

(11) **EP 3 298 464 B1**
(45) Veröffentlichungstag und Bekanntmachung des Hinweises auf die Patenterteilung: **06.02.2019**
(21) Anmeldenummer: 16726001.7
(22) Anmeldetag: 13.04.2016
(51) Int. Cl.: G05B 19/042

(54) **FERNWARTUNGSSYSTEM MIT EINER MOBILEN FERNWARTUNGSEINHEIT UND EIN KONFIGURATIONSVERFAHREN**
REMOTE MAINTENANCE SYSTEM HAVING A MOBILE REMOTE MAINTENANCE UNIT, AND CONFIGURATION METHOD
SYSTÈME DE MAINTENANCE À DISTANCE COMPRENANT UNE UNITÉ DE MAINTENANCE À DISTANCE MOBILE ET UN PROCÉDÉ DE CONFIGURATION

(30) Priorität: 13.04.2015 AT 502912015
(43) Veröffentlichungstag der Anmeldung: 28.03.2018
(73) Patentinhaber: Schwaiger, Mario, 6600 Reutte (AT)
(72) Erfinder: Schwaiger, Mario, 6600 Reutte (AT)
(74) Vertreter: Burger, Hannes
(86) Internationale Anmeldenummer: PCT/AT2016/050094
(87) Internationale Veröffentlichungsnummer: WO 2016/164950

(56) Entgegenhaltungen:
- EP-A1- 1 798 620
- DE-A1-102010 017 938
- DE-A1-102014 214 478

## Beschreibung

Die Erfindung betrifft ein Fernwartungssystem mit einer mobilen Fernwartungseinheit und ein Verfahren zur Konfiguration einer mobilen Fernwartungseinheit in einem Fernwartungssystem.

Bei Betriebsstätten, Werkzeug- bzw. Produktionsmaschinen, Fertigungsstraßen und dergleichen, erfolgt eine initiale Inbetriebnahme der Anlage, um diese dann möglichst lang in einen ungestörten und zumeist ununterbrochenen Produktionsbetrieb zu versetzen. Im Fall einer Störung einer einzelnen Einheit ist es dann von besonderer Bedeutung, wenn ein kundiger Techniker möglichst rasch an den Einsatzort gelangt, um die entsprechenden Wartungsarbeiten durchführen zu können. Gerade im Bereich von Fertigungssystemen bzw. Produktionsanlagen bedeutet ein Ausfall bzw. ein Stillstand einer Komponente, sofort einen zumeist nicht unbeträchtlichen, wirtschaftlichen Schaden, wobei der Schadensbetrag teilweise in Minuten-Intervallen gemessen wird. Daher werden zwischen dem Betreiber einer solchen Anlage und dem Lieferanten bzw. Hersteller von systemkritischen Komponenten, Servicevereinbarungen getroffen, in denen eine zumeist sehr kurze Reaktionszeit vereinbart wird. Derartige Vereinbarungen haben den Nachteil, dass sie meist sehr kostspielig sind und trotzdem ein Stillstand bzw. ein Ausfall einer Komponente gegeben ist, bis der externe Servicetechniker vor Ort ist.

Bekannt sind Fernwartungssysteme, bei denen sich ein externer Techniker mit einem System bzw. einer Komponente am Betriebsort verbindet und Wartungs- bzw. Servicearbeiten durchführt. Dazu ist es jedoch erforderlich, dass die betroffene Komponente die externe Verbindung noch annehmen kann, ferner muss die Komponente grundsätzlich dafür ausgebildet sein, also dass eine grundsätzliche Möglichkeit einer Fernwartung gegeben ist. Dies hat jedoch den Nachteil, dass ein externer Servicetechniker eine Vielzahl unterschiedlicher Zugriffsvariationen verfügbar haben muss, um auf eine Vielzahl ausgelieferter Komponenten zugreifen zu können. Ein bedeutender Nachteil ergibt sich auch dadurch, dass im Zuge eines solchen Wartungsvorgangs nur jene Aktionen ausführt werden können, die bei der ursprünglichen Produktion bzw. Inbetriebnahme der Komponente vorgesehen waren. Ist die betroffene Komponente für Fernwartung nicht mehr erreichbar bzw. sind Aktionen durchzuführen, die bei der ursprünglichen Produktion nicht vorgesehen waren, wird ein derartiger Fernwartungsversuch scheitern.

Ferner sind Fernwartungslösungen bekannt, bei denen ein lokaler Techniker über ein Kommunikationssystem, zumeist ein Telefon und gegebenenfalls eine Videoleitung, mit einem externen Techniker verbunden ist. Gegenüber den zuvor genannten Systemen hat diese Ausführung den Vorteil, dass der externe Techniker mit jemandem vor Ort kommunizieren kann und somit deutlich mehr Handlungsmöglichkeiten hat. Aufgrund der Einschränkungen durch die Kommunikationsmöglichkeit bzw. den Aufwand zur Herstellung einer Kommunikationsverbindung zwischen dem lokalen Servicetechniker und dem externen Spezialisten, geht viel Zeit für die Lösung des bestehenden Problems verloren. Auch ist bei diesen Ausführungen zumeist ein beträchtlicher Aufwand erforderlich, die Fernwartungslösung aufzubauen und einzurichten.

Die DE 10 2010 017 938 A1 offenbart ein Fernwartungssystem zur Bereitstellung von Sensordaten. Ein mobiles Fernwartungs-Kommunikationsgerät kommt bei der Wartung bzw. beim Service von Maschinenkomponenten auf einem Betriebsgelände oder einem sonstigen abgeschlossenen Bereich zum Einsatz. Das Fernwartungs-Kommunikationsgerät weist ein Nahfeldkommunikationsmodul auf, um das Gerät gegenüber der Komponente zu authentifizieren, wobei auf der zu servicierenden Komponente, ein kontaktlos auslesbares Tag angeordnet ist. Nach der Authentifzierung des Tags gegenüber dem Mobilgerät (bzw. umgekehrt), kann eine Einschränkung des Bereichs festgelegt werden, in welchem das Mobilgerät funktionieren darf. Ferner ist es möglich, dass eine regelmäßige Re-Authentifizierung erfolgt und bei Verlust dieser Authentifizierung, ein Zugriff auf Sensoren eingeschränkt bzw. das Mobilgerät deaktiviert wird. Nach erfolgter Authentifizierung kann das mobile Wartungsgerät für die Übertragung von Sensordaten an das entfernte Servicecenter freigeschaltet werden.

Von Vorteil wäre nun, wenn eine Fernwartung jederzeit und unabhängig von der ursprünglichen Konfiguration der Komponente möglich wäre und ferner auch manuelle Bedienhandlungen durchführbar wären, ohne dass dafür ein externer Spezialist an den Ort der betroffenen Komponente sich begeben muss. Ferner soll eine Fernwartung von einem Techniker mit einem allgemeinen technischen Verständnis durchgeführt werden können, insbesondere soll kein aufwändiger Aufbau bzw. eine aufwändige Konfiguration eines Fernwartungssystems erforderlich sein.

Die Aufgabe der Erfindung besteht nun darin, ein System zur Fernwartung einer Komponente zu schaffen, mit dem ein rasches Eingreifen eines externen Spezialisten am Ort der betroffenen Komponente möglich wird und ferner die Nachteile bekannter Fernwartungssysteme überwunden werden. Ferner soll eine Möglichkeit geschaffen werden, wie ein lokaler Servicetechniker mit einem externen Spezialisten interaktiv zusammenarbeiten kann.

Die Aufgabe der Erfindung wird gelöst durch ein Fernwartungssystem, welches eine zu wartende bzw. zu bedienende technische Vorrichtung, eine mobile Fernwartungseinheit, ein Kommunikationsnetzwerk, und zumindest eine Kommunikationsgegenstelle umfasst. Die Fernwartungseinheit umfasst ein, für den Mobilbetrieb ausgelegtes Computersystem, und weist somit zumindest einen Hauptprozessor, flüchtige und nicht-flüchtige Speichermittel, eine Sensorschnittstelle und eine Kommunikationsschnittstelle auf. Ferner weist die mobile Fernwartungseinheit eine Mensch-Maschine-Schnittstelle auf. Über das Kommunikationsnetzwerk besteht zwischen der Kommunikationsschnittstelle der Fernwartungseinheit und der Kommunikationsgegenstelle eine Datenverbindung. An der zu wartenden technischen Vorrichtung ist ein kontaktlos auslesbarer Datenspeicher hinterlegt, wobei im Datenspeicher Konfigurationsdaten des Kommunikationsnetzwerks und Konfigurationsdaten der Kommunikationsschnittstelle hinterlegt sind. Ferner weist die mobile Fernwartungseinheit ein Auslesemittel zum Auslesen des Datenspeichers auf.

Unter Wartung wird hierin jede Aktion verstanden, die einen Eingriff und/oder einen Zugriff zur technischen Vorrichtung umfasst bzw. erforderlich macht. Insbesondere bspw. um vor Ort Daten zu erfassen, die einem externen Experten helfen, ein bestehendes Problem bzw. eine bestehende Anforderung zu lösen. Auch wird eine Einstell- bzw. Parametrierhandlung als Wartung verstanden.

Ein mobiles Computersystem ist speziell an die Anforderung beim mobilen Einsatz ausgelegt, insbesondere auf eine lange Einsatzdauer ohne externe Energieversorgung. Somit wird die Mensch-Maschine-Schnittstelle einen gegenüber Arbeitsplatzsystem reduzierten Funktionsumfang haben, beispielsweise eine kleinere Anzeige ggf. kombiniert mit einer Bildschirmtastatur. Auch wird das Computersystem aufgrund der Spezialisierung auf die durchzuführende Aufgabe, hinsichtlich seiner universellen Einsetzbarkeit eingeschränkt sein.

Unter Sensorschnittstelle wird ein Anschluss verstanden, der, bevorzugt mehrfach vorhanden, zum Anschluss einer Mehrzahl unterschiedlicher Sensorsysteme ausgebildet ist. Beispielsweise können als Sensorsystem verstanden werden: optische und thermografische Kamerasysteme, Endoskopie Systeme und Sensoren zur Erfassung physikalischer Größen. Insbesondere ist die gegenständliche Sensorschnittstelle derart ausgebildet, dass ein verbundenes Sensorsystem automatisch erkannt und das entsprechende Zugriffsmodul in das Computersystem geladen wird, um so ohne weiteres Zutun des Bedieners die ihm eigene Funktion ausführt.

Unter Hinterlegung ist zu verstehen, dass die Konfigurationsdaten in einer maschinenlesbaren Form im Datenspeicher vorhanden sind. Eine Ausbildung der Konfigurationsdaten in einer menschlich lesbaren Ausführung ist nicht erforderlich, bzw. aus Datenschutzgründen ggf. auch nicht gewünscht.

Eine Weiterbildung besteht darin, dass der Datenspeicher als optisch auslesbarer 2D-Code ausgebildet ist. Nicht abschließende Beispiele dafür sind QR- und DataMatrix-Codes. Derartige Codes ermöglichen die Bildung eines Datenspeichers mit einem zwar beschränkten, für die zu hinterlegenden Konfigurationsdaten jedoch ausreichenden Speichervermögen. Der Vorteil solcher Codes liegt darin, dass für sie, aufgrund der Standardisierung und weiten Verbreitung, eine große Zahl von Möglichkeiten verfügbar sind, die Codes zu erstellen. Auch sind Erfassungsmittel und insbesondere eine Vielzahl von Bibliotheken zur Extraktion des codierten Inhalts verfügbar. Beim Abweichen von standardisierten Ausführungen kann auch die hinterlegbare Datenmenge an den geforderten Umfang angepasst werden.

Eine Weiterbildung besteht auch darin, dass der Datenspeicher als per Funk auslesbares Codeelement ausgebildet ist. Ebenfalls nicht abschließende Beispiele dafür sind NFC- bzw. RFID-basierte Tags. In Einsatzbereichen, in denen mit einer Schmutzbelastung zu rechnen ist, haben per Funk auslesbare Datenspeicher den Vorteil, dass eine Verschmutzung die Verwendbarkeit des Datenspeichers nicht, oder nicht wesentlich einschränkt.

Nach einer Weiterbildung ist vorgesehen, dass die Datenverbindung als eine Paket-Netzverbindung ausgebildet ist. Paket-orientierte Datenverbindungen sind sehr weit verbreitet, so dass die Wahrscheinlichkeit sehr hoch ist, dass am Einsatzort irgendeine technische Realisierung einer Paket-Netzverbindung vorhanden ist. Insbesondere wird unter einer Paket-Netzverbindung jede Datenverbindung verstanden, die auf dem IP (Internet Protokoll) Standard basiert, bevorzugt auf dem TCP/IP-Standard. Dadurch ist gewährleistet, dass die Fernwartungseinheit am Einsatzort ein Kommunikationsnetzwerk findet, und eine Datenverbindung aufbauen kann. Nicht abschließende Beispiele dafür sind Datenverbindungen die über kabelgebundene und kabel-ungebundene Kommunikationsnetze wie LAN (Ethernet), WLAN, GPRS, etc. aufgebaut werden können.

Nach einer Weiterbildung ist vorgesehen, dass die mobile Fernwartungseinheit mit einer, vom Bediener der Fernwartungseinheit getragenen, audio-visuellen Ein-Ausgabevorrichtung verbunden ist. Diese Ausbildung hat den Vorteil, dass damit der Bediener die Hände für Wartungstätigkeiten frei hat. Bevorzugt ist die Vorrichtung als so genanntes HeadSet ausgebildet, was den Vorteil hat, dass die audio-visuellen Ein-Ausgabevorrichtung der Bewegung des Kopfes und damit der Blickrichtung des Bedieners folgt.

Eine Weiterbildung besteht auch darin, dass die audio-visuelle Ein-Ausgabevorrichtung eine Bilderfassungs- und/oder eine Audioerfassungs- und/oder eine Audioausgabevorrichtung aufweist. Diese Ausführungsvarianten haben den Vorteil, dass im Fall einer Bilderfassungsvorrichtung die Kommunikationsgegenstelle ein Live-Bild vom Einsatzort bekommt. Im Fall der Ausführung mit einer Audioerfassungs- und/oder einer Audioausgabevorrichtung kommt zusätzlich noch die Möglichkeit einer uni- bzw. bidirektionalen Audioübertragung, insbesondere einer Sprachkommunikation, dazu.

Eine Weiterbildung besteht auch darin, dass die audio-visuelle Ein-Ausgabevorrichtung ferner eine Bildausgabevorrichtung aufweist. Gemäß einer bevorzugten Ausbildung der audio-visuelle Ein-Ausgabevorrichtung als HeadSet, kann diese Weiterbildung darin bestehen, dass im Sehbereich des Auge des Bedieners, ein semi-transparenter Projektionsschirm, oder ein Prisma angeordnet ist, in welchem dem Träger des HeadSets von der Bildausgabevorrichtung Information eingeblendet wird, ohne den Sehbereich des Trägers wesentlich zu beeinträchtigen. Neben einem semi-transparenten Projektionsschirm kann auch vorgesehen sein, dass in einem seitlichen Bereich, außerhalb der Haupt-Sehrichtung, um den Blick des Bedieners nicht zu beeinträchtigen, eine Anzeigevorrichtung angeordnet ist. Nicht abschließend, kann diese Anzeigevorrichtung bspw. ein LC-Display, ein TFT-Display, o.ä. sein.

Von Vorteil ist eine Weiterbildung, nach der das Auslesemittel durch die Bilderfassungsvorrichtung gebildet ist. Somit wird einerseits eine sehr kompakte Ausführung erreicht, andererseits ist bei einer Ausführung als HeadSet gewährleistet, dass das Auslesemittel stets auf den Arbeitsbereich ausgerichtet ist.

Eine Weiterbildung besteht auch darin, dass das Auslesemittel durch eine Hochfrequenz Sende- und Empfangsvorrichtung gebildet ist und somit Datenspeicher ausgelesen werden können, die eine Hochfrequenzbasierte Kommunikationsschnittstelle aufweisen, wie NFC-, oder RFID-Tags.

Nach einer Weiterbildung ist ferner vorgesehen, dass die Konfigurationsdaten zur ausschließlich einmaligen Verwendung ausgebildet sind. Beim Wartungsfall kann es vorkommen, dass sich die Fernwartungseinrichtung mit dem Datennetz des Kunden verbinden muss, und vom Kunden Zugangsdaten zum Firmennetz bekannt gegeben werden. Nach Beendigung der Wartung verlassen die in der Fernwartungseinrichtung hinterlegten Konfigurationsdaten das Unternehmen und könnten gegebenenfalls von Dritten missbräuchlich verwendet werden. Mit der gegenständlichen Ausführung lässt sich nun gewährleisten, dass auch für den Fall, dass Konfigurationsdaten in falsche Hände geraten, diese nicht missbräuchlich verwendet werden können, da diese nach einmaliger Verwendung ungültig werden. Beendet der Servicetechniker die Wartungsarbeit und baut die Datenverbindung ab, verlieren die Konfigurationsdaten ihre Gültigkeit. Erreicht wird das bspw. dadurch, das vom Kunden einmal gültige Zugangsdaten erzeugt und im Datenspeicher hinterlegt werden.

Im Weiteren sind unter der Vereinfachten alleinigen Nennung von Konfigurationsdaten, immer sowohl die Konfigurationsdaten der Kommunikationsgegenstelle, als auch die Konfigurationsdaten der Kommunikationsschnittstelle gemeint.

In eine ähnliche Richtung geht eine Weiterbildung, nach der in den Konfigurationsdaten zeitliche und/oder bedienerbezogene Bereichsangaben hinterlegt sind. Mit dieser Weiterbbildung kann bspw. erreicht werden, dass ein Zugriff auf das (interne) Kommunikationsnetzwerk des Kunden nur in einer vordefinierten Zeitspanne und/oder durch einen definierbaren Benutzer möglich ist. Somit lässt sich ebenfalls gewährleisten, dass das firmeneigene Netzwerk durch einen Wartungsfall nicht kompromittiert werden kann.

Nach einer Weiterbildung sind die Konfigurationsdaten der Kommunikationsschnittstelle als zumindest eines der Gruppe Netzwerkkennung, Benutzername, Kennwort, Netzwerkparameter, VPN-Parameter ausgebildet.

Da gemäß weiterer Ausbildungen standardisierte Datenspeicher verwendet werden, die von einer Vielzahl verfügbarer Lesegeräten ausgelesen werden können, ist zur Erhöhung des Schutzes der hinterlegten Konfigurationsdaten vorgesehen, dass die im Datenspeicher hinterlegten Konfigurationsdaten verschlüsselt sind.

Eine Weiterbildung besteht darin, dass die Konfigurationsdaten mit einem öffentlichen Schlüssel eines public-key Schlüsselpaares verschlüsselt sind, wobei der private Schlüssel im Computersystem der mobilen Fernwartungseinheit, insbesondere im nichtflüchtigen Speichermittel oder in einem, mit dem Computersystem verbindbaren Speichermittel, hinterlegt ist. Dies ermöglicht es, das dem Betreiber der zu wartenden Vorrichtung der öffentliche Schlüssel übermittelt wird, welchen dieser verwendet, um die Konfigurationsdaten zu verschlüsseln und im Datenspeicher abzulegen. Durch eine Hinterlegung des privaten Schlüssels im nicht-flüchtigen Speichermittel lässt sich gewährleisten, bspw. durch Zugriffsbeschränkungen an der Fernwartungsvorrichtung, dass der Servicetechniker nicht auf die, in der Fernwartungsvorrichtung zumeist in entschlüsselter Form vorliegenden Konfigurationsdaten zugreifen kann. Somit ist auch mit dieser Weiterbildung ein Schutz der Zugangsdaten zum Kundennetzwerk gewährleistet. Ein verbindbares Speichermittel könnte bspw. als sogenannter Dongle ausgebildet sein, der bei Bedarf zum Entschlüsseln der Konfigurationsdaten, mit der Fernwartungsvorrichtung verbunden wird.

Eine Weiterbildung besteht auch darin, dass mit der Fernwartungseinheit ein Protokollspeicher verbunden ist, wobei die Verbindung gegebenenfalls über das Kommunikationsnetzwerk gebildet ist. Im Sinne einer Nachverfolgbarkeit der durchgeführten Wartungsarbeiten ist es von Vorteil, wenn die gesetzten Handlungen auch bei einer zeitlich späteren Auswertung zur Verfügung stehen. Ein anspruchsgemäßer Protokollspeicher kann bspw. durch einen sogenannten Netzwerkspeicher gebildet sein, der über das Kommunikationsnetzwerk angesprochen wird. Die Zugriffsdaten können dafür auch im Datenspeicher hinterlegt sein, um beim Auslesen die Kommunikationsschnittstelle bzw. die Fernwartungseinheit dahingehend konfigurieren, mit dem Protokollspeicher eine Verbindung herzustellen. In einer Weiterbildung kann der Protokollspeicher auch durch eine E-Mail-Adresse bzw. ein E-Mail-Postfach gebildet sein.

Nach einer Weiterbildung ist ferner vorgesehen, dass an der zu wartenden bzw. zu bedienenden technische Vorrichtung ein kontaktlos beschreibbarer Protokollspeicher angeordnet ist. Dieser kann bspw. als NFC- oder RFID-Tag ausgebildet sein, möglich ist auch, dass der Protokollspeicher durch den Datenspeicher gebildet bzw. in diesem ausgebildet ist.

Die Aufgabe der Erfindung wird auch durch ein Konfigurationsverfahren einer mobilen Fernwartungseinheit in einem Fernwartungssystem gelöst, welches Konfigurationsverfahren die folgenden Schritte umfasst. Das Auslesemittel der mobilen Fernwartungseinheit wird vom Bediener auf den Datenspeicher ausgerichtet und aktiviert, worauf die Konfigurationsdaten aus dem Datenspeicher ausgelesen werden. Mit den ausgelesenen Konfigurationsdaten der Kommunikationsschnittstelle der mobilen Fernwartungseinheit wird diese konfiguriert. Anschließend wird ein ausgelesener Datensatz der Konfigurationsdaten der Kommunikationsgegenstelle an der Mensch-Maschine-Schnittstelle dargestellt, und vom Bediener der Datensatz der Kommunikationsgegenstelle an der Mensch-Maschine-Schnittstelle ausgewählt. Mit den Konfigurationsdaten der ausgewählten Kommunikationsgegenstelle wird dann die Kommunikationsschnittstelle der mobilen Fernwartungseinheit konfiguriert und eine Datenverbindung zwischen der Kommunikationsschnittstelle der mobilen Fernwartungseinheit und der Kommunikationsgegenstelle aufgebaut. Danach erfolgt eine Übertragung von Audio- und/oder Visuellen-Informationspaketen zwischen der Kommunikationsgegenstelle und der Fernwartungseinheit, insbesondere inklusive der Darstellung und/oder Erfassung der übertragenen Informationspakete an der Mensch-Maschine-Schnittelle.

Das Aktivieren des Auslesemittels muss nicht zwingend durch den Bediener initiiert werden, sondern kann auch automatisiert in einem Initialisierungsprozess erfolgen. Beispielsweise kann vorgesehen sein, dass nach dem Einschalten des Geräts das Auslesemittel automatisch aktiviert wird, und nach einem auslesbaren Datenspeicher sucht, wobei die Suchzeit begrenzbar ist. Wird durch die Ausrichtung des Geräts ein Datenspeicher gefunden, wird dieser ausgelesen und die weiteren Verfahrensschritte durchgeführt. Auch kann vorgesehen sein, dass nach Einschalten des Geräts dieses sich in einen Such-Modus wechselt und erst nach Auslesen eines Datenspeichers in einen Vollbetrieb wechselt.

Die Konfiguration wird im Wesentlichen vom Hauptprozessor, insbesondere den Ausführungseinheiten des Hauptprozessors ausgeführt, wie dies von einem Computersystem, auch einem spezifisch ausgebildeten, mit einem eingeschränkten Funktionsumfang ausgestatteten Computersystem bekannt ist.

Eine Weiterbildung besteht darin, dass nach Ende der Fernwartung, die Datenverbindung abgebaut und die Konfigurationsdaten aus der Fernwartungseinheit gelöscht werden. Damit wird sichergestellt, dass die Zugangsdaten zum firmeninternen Kommunikationsnetz die Firma nicht verlassen können.

In diese Richtung geht auch eine Weiterbildung, nach der ein Zugriff des Bedieners auf die in der Fernwartungseinheit hinterlegten Konfigurationsdaten durch Zugriffsbeschränkungen verunmöglicht wird. Eine Zugriffsbeschränkung kann bspw. durch die Abfrage einer Bedienerkennung realisiert werden, wobei vom Hauptprozessor geprüft wird, ob die Bedienerkennung und ein Kennwort korrekt sind, und ob diesem Bediener ein Zugriff auf diese Konfigurationsdaten gestattet ist.

Mit einer Weiterbildung, nach der beim Ausrichteschritt die Fernwartungseinheit vom Bediener in einen Nahbereich des Datenspeichers bewegt wird, lässt sich gewährleisten, dass ein Auslesen der Konfiguration nur dann möglich ist, wenn sich die Fernwartungseinheit im Nahbereich des Datenspeichers befindet. Beispielsweise wird dies erreicht, in dem die Größe der Codeelemente eines optischen 2D-Codes so gewählt werden, dass bei einem größeren Abstand die Auflösung des Auslesemittels nicht ausreicht, die Konfigurationsdaten auszulesen. Bei Funk-basierten Datenspeichern kann dies durch Gestaltung der Sende- und/oder Empfangscharakteristik erreicht werden. Somit lässt sich ein unbefugtes Auslesen aus der Entfernung verhindern.

Um sicherzustellen, dass unbefugt ausgelesene Konfigurationsdaten nicht ausgenützt werden können, ist gemäß einer Weiterbildung vorgesehen, dass die ausgelesenen Konfigurationsdaten mit dem im Speichermittel der Fernwartungseinheit hinterlegten privaten Schlüssel entschlüsselt werden.

Um eine unbefugte Inbetriebnahme der Fernwartungseinheit zu verhindern, ist gemäß einer Weiterbildung vorgesehen, dass zumindest vor dem Aufbau der Datenverbindung eine Authentifizierung des Bedieners der Fernwartungseinheit durchgeführt wird. Bevorzugt erfolgt diese Authentifizierung über eine Eingabemaske an der Mensch-Maschine-Schnittstelle. Es ist jedoch auch möglich, dass auch der Bediener einen Datenspeicher zugewiesen hat, der auch vom Auslesemittel ausgelesen werden muss, um einen Vollbetrieb der Fernwartungseinheit zu ermöglichen. Der Datenspeicher des Benutzers kann auch optisch bzw. als per Funk auslesbar ausgebildet sein, sodass das Auslesemittel ohne Anpassung dafür verwendet werden kann.

Um die durchgeführten Wartungsschritte einem Bediener zuordnen zu können, ist gemäß einer Weiterbildung vorgesehen, dass eine Kennung des authentifizierten Benutzers im Protokollspeicher abgelegt wird. Für eine spätere Analyse und Prüfung ist es somit leicht möglich, den betreffenden Bediener herauszufinden, um durchgeführte Schritte zu besprechen.

Ebenfalls zur späteren Prüfung und Nachvollziehung ist gemäß einer Weiterbildung vorgesehen, dass zumindest ein Teil der übertragenen Audio- und/oder Visuellen-Informationspakete im Protokollspeicher abgelegt werden. Somit ist ggf. eine 1:1 Nachverfolgung der durchgeführten Schritte möglich, was insbesondere bei Fragen der Gewährleistung von Bedeutung sein kann.

Nach einer Weiterbildung ist ferner vorgesehen, dass über die Datenverbindung Sensor- und/oder Aktordaten übertragen werden. Beispielsweise kann es für den externen Spezialisten an der Kommunikationsgegenstelle wichtig sein, wenn dieser direkt auf Daten der, an der Sensorschnittstelle angeschlossenen Sensoren, zugreifen kann. Oder aus der Entfernung, eine an der Fernwartungseinheit angeschlossene Vorrichtung steuern zu können, bspw. eine Kamera mittels PTZ-Kommandos ausrichten.

Zum besseren Verständnis der Erfindung wird diese anhand der nachfolgenden Figuren näher erläutert.

Es zeigen jeweils in stark vereinfachter, schematischer Darstellung:
- Fig. 1: das gegenständliche Fernwartungssystem;
- Fig. 2: die grundlegenden Schritte zur Konfiguration der gegenständlichen Fernwartungseinheit.

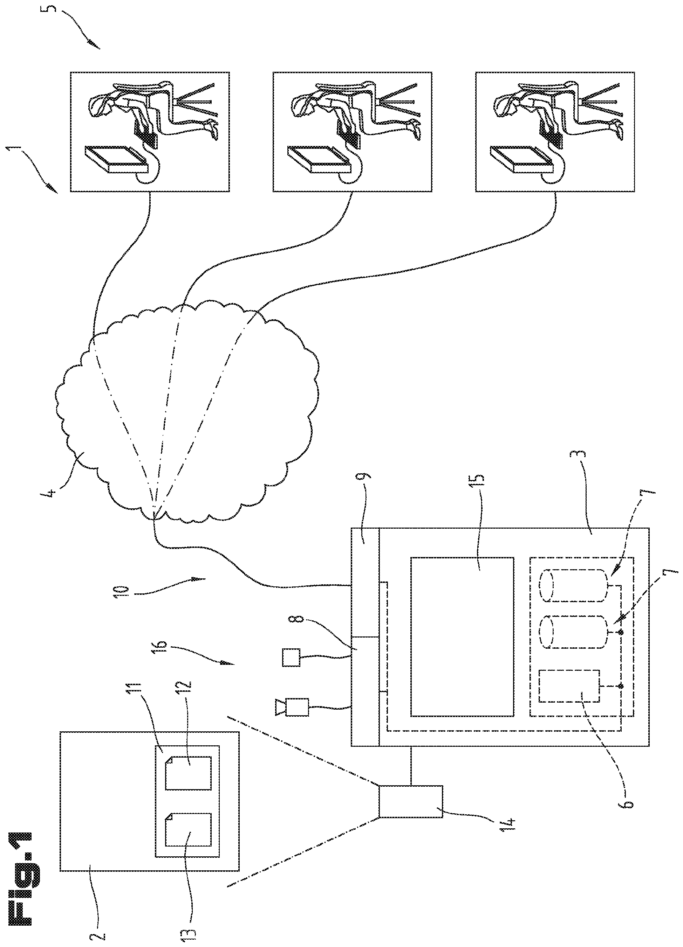

Fig. 1 zeigt das gegenständliche Fernwartungssystem 1, umfassend eine zu wartende bzw. zu bedienende, technische Vorrichtung 2, eine mobile Fernwartungseinheit 3, ein Kommunikationsnetzwerk 4 und zumindest eine Kommunikationsgegenstelle 5. Die Fernwartungseinheit 3 weist zumindest einen Hauptprozessor 6 sowie flüchtige und nicht flüchtige Speichermittel 7 auf. Die Fernwartungseinheit 3 weist ferner eine Sensorschnittstelle 8 und eine Kommunikationsschnittstelle 9 auf. Zwischen der Kommunikationsschnittstelle 9 der Fernwartungseinheit 3, und der Kommunikationsgegenstelle 5 besteht eine Datenverbindung 10. An der zu wartenden, technischen Vorrichtung 2 ist ein kontaktlos auslesbarer Datenspeicher 11 hinterlegt, in welchem Datenspeicher 11 Konfigurationsdaten 12 der Kommunikationsschnittstelle 9 und Konfigurationsdaten 13 der Kommunikationsgegenstelle 5 hinterlegt sind. Zum Auslesen der Konfigurationsdaten 12, 13 weist die Fernwartungseinheit 3 ein Auslesemittel 14 auf. Zur Interaktion mit dem Bediener weist die Fernwartungseinheit 3 noch eine Mensch-Maschine-Schnittstelle 15 auf, welche bevorzugt durch einen Bildschirm, insbesondere durch einen kontaktsensitiven Bildschirm gebildet ist. An der Sensorschnittstelle 8 können eine Mehrzahl von Sensoren 16 angeschlossen werden, welche Sensoren beispielsweise zur Erfassung physikalischer Größen ausgebildet, und/oder optische Sensoren sein können, bspw. Thermographie oder Endoskop-Kameras.

Das Kommunikationsnetzwerk 4 kann als ein beliebiges, paketorientiertes Kommunikationsnetzwerk ausgebildet sein, welche das Internetprotokoll (IP, bevorzugt TCP/IP) unterstützt. Somit sind eine Vielzahl unterschiedlicher kabelloser und kabelgebundener Kommunikationsnetzwerke bzw. Kommunikationsmedien verwendbar, sodass mit sehr großer Wahrscheinlichkeit davon ausgegangen werden kann, dass ein derartiges Kommunikationsnetzwerk am Ort des Wartungsfalls zur Verfügung steht und sich die Fernwartungseinheit mit dem Kommunikationsnetz verbinden, und eine Datenverbindung aufbauen kann.

Die Kommunikationsgegenstelle 5 wird zumeist ein Computersystem sein, welches von einem Spezialisten bedient wird und bevorzugt Vollzugriff auf alle Ressourcen des Herstellers der zu wartenden Komponenten hat. Aufgrund der aufgebauten Datenverbindung 10 ist es ohne Bedeutung, an welchem Ort sich die Kommunikationsgegenstelle 5 befindet, sodass sich für den Hersteller der Komponente der bedeutende Vorteil ergibt, dass die Spezialisten für das zu wartende System zentral bzw. im Nahbereich des Herstellers ihren Sitz haben können und trotzdem eine sehr schnelle Reaktionszeit für den Kunden gegeben ist.

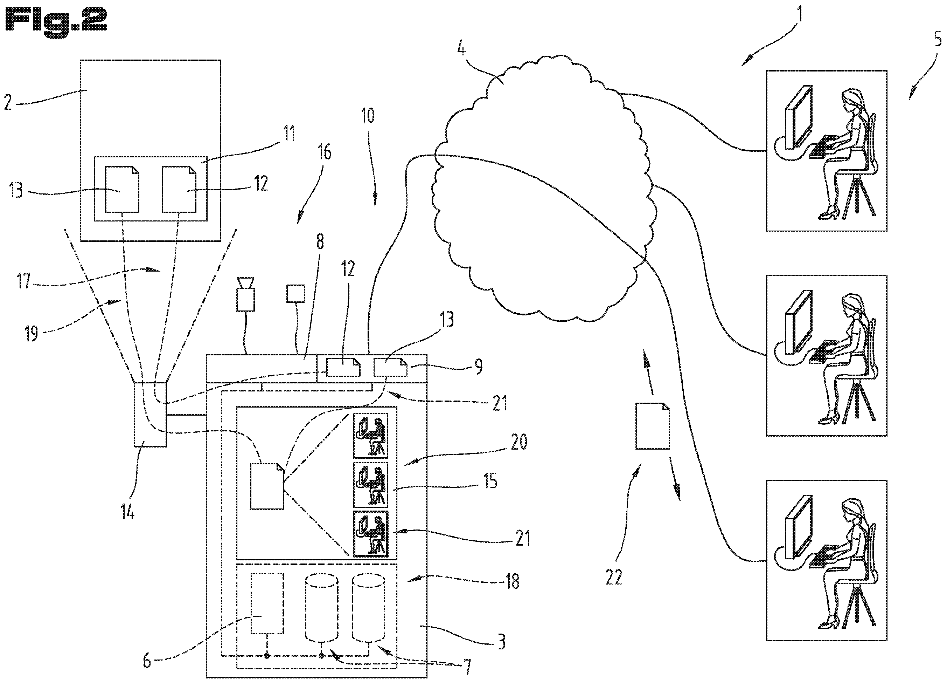

Fig. 2 zeigt schematisch einen Ablauf des gegenständlichen Verfahrens zur Konfiguration einer mobilen Fernwartungseinheit 3 in einem gegenständlichen Fernwartungssystem 1. In einem ersten Schritt 17 wird das Auslesemittel 14 vom Bediener der Fernwartungseinheit 3 in den Nahbereich der technischen Vorrichtung 2, insbesondere in den Nahbereich des Datenspeichers 11 gebracht, und nach Aktivierung des Auslesemittels 14 der Datenspeicher 11, insbesondere die Konfigurationsdaten 12 der Kommunikationsschnittstelle 9, ausgelesen. Vom Computersystem 18 werden die in den Konfigurationsdaten 12 enthaltenen Anweisungen decodiert und daraufhin die Kommunikationsschnittstelle 9 mit den entsprechenden Zugangsparametern zum Kommunikationsnetzwerk 4 parametriert. Somit kann bereits eine datentechnische Verbindung mit den Kommunikationsnetzwerk 4 hergestellt werden, beispielsweise um auf Internetressourcen zugreifen zu können.

Mit dem Auslesen der Konfigurationsdaten 12 der Kommunikationsschnittstelle im ersten Schritt 17 können aber auch gleichzeitig auch die Konfigurationsdaten 13 der Kommunikationsgegenstelle 5 ausgelesen werden, wobei dies auch in einem nachfolgenden zweiten Schritt 19 möglich ist. Auch diese Konfigurationsdaten 13 werden vom Computersystem 18 decodiert, analysiert und ein Datensatz 20 daraus an der Mensch-Maschine-Schnittstelle 15 dargestellt.

Von dem Bediener wird in einem dritten Schritt 21 einer der dargestellten Daten-sätze 20 ausgewählt, woraufhin vom Computersystem 18 die Kommunikationsschnittstelle 9 mit dem gewählten Datensatz 20 konfiguriert wird und somit eine Datenverbindung 10 zwischen der Kommunikationsschnittstelle 9, und damit der Fernwartungseinheit 3, und der ausgewählten Kommunikationsgegenstelle 5 hergestellt wird.

Anschließend beginnt die Fernwartung und es werden audio- und/oder visuelle-Informationspakete 22, und ggf. Datenpakete mit Sensor-, Aktor- und Steuerdaten, zwischen der Fernwartungseinheit 3 und der Kommunikationsgegenstelle 5 ausgetauscht.

Nach Ende der Fernwartungssitzung werden die Konfigurationsdaten 12, 13 aus der Kommunikationsschnittstelle 9 gelöscht, sodass gewährleistet ist, dass sicherheitsrelevante Zugangsdaten das Unternehmen des Betreibers der technischen Vorrichtung 2 nicht verlassen.

Der besondere Vorteil des gegenständlichen Konfigurationsverfahrens bzw. des gegenständlichen Fernwartungssystems liegt nun darin, dass ein Bediener mit grundlegenden technischen Kenntnissen in der Lage ist, eine Wartung an einer technischen Vorrichtung 2 durchzuführen, da der Bediener von einem externen Spezialisten an einer, mit der Fernwartungseinheit 3 verbundenen, externen Kommunikationsgegenstelle 5 unterstützt wird. Für den externen Spezialisten an der Kommunikationsgegenstelle 5 besteht der Vorteil darin, dass er vollen Zugriff, auch physischen Zugriff, zu der zu wartenden technischen Vorrichtung 2 hat, ohne persönlich vor Ort sein zu müssen. Für den Betreiber der Anlage bzw. der technischen Vorrichtung 2 ergibt sich der besondere Vorteil, dass eine sehr kurze Reaktionszeit zur Behebung einer Störung bzw. zur Durchführung einer Wartung der technischen Vorrichtung gegeben ist. Des Weiteren ist von Vorteil, dass sich der Bediener der Fernwartungseinheit 3, nicht um die Parametrierung bzw. um den Aufbau der Datenverbindung 10 kümmern muss, sondern dies automatisch und ohne sein Zutun durch Auslesen und Übernahme von hinterlegten Konfigurationsdaten erfolgt. Für den Betreiber der Anlage ergibt sich daraus ein weiterer Vorteil, dass sensible Zugangsdaten zu einem firmeninternen Kommunikationsnetz nicht bekannt gegeben werden müssen und gegebenenfalls sichergestellt werden kann, dass diese Zugangsdaten die Betriebsstädte der technischen Vorrichtung nicht verlassen können.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten des Fernwartungssystem und des Konfigurationsverfahren wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Des Weiteren können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Vor allem können die einzelnen in den Figuren gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Fernwartungssystem und des Konfigurationsverfahren diese bzw. deren Bestandteile teilweise unmaßstäblich und/oder vergrößert und/oder verkleinert dargestellt wurden.

### Bezugszeichenaufstellung

- 1: Fernwartungssystem
- 2: technische Vorrichtung
- 3: Fernwartungseinheit
- 4: Kommunikationsnetzwerk
- 5: Kommunikationsgegenstelle
- 6: Hauptprozessor
- 7: Speichermittel
- 8: Sensorschnittstelle
- 9: Kommunikationsschnittstelle
- 10: Datenverbindung
- 11: Datenspeicher
- 12: Konfigurationsdaten der Kommunikationsschnittstelle
- 13: Konfigurationsdaten der Kommunikationsgegenstelle
- 14: Auslesemittel
- 15: Mensch-Maschine-Schnittstelle
- 16: Sensoren
- 17: erster Schritt
- 18: Computersystem
- 19: zweiter Schritt
- 20: Datensatz
- 21: dritter Schritt
- 22: Informationspakete

## Patentansprüche

1. Fernwartungssystem (1), umfassend
eine zu wartende bzw. zu bedienende technische Vorrichtung (2),
eine mobile Fernwartungseinheit (3),
ein Kommunikationsnetzwerk (4),
und zumindest eine Kommunikationsgegenstelle (5),
wobei die Fernwartungseinheit (3) ein, für den Mobilbetrieb ausgelegtes Computersystem (18) umfasst, und zumindest einen Hauptprozessor (6), flüchtige und nicht-flüchtige Speichermittel (7), eine Sensorschnittstelle (8) und eine Kommunikationsschnittstelle (9) aufweist,
und wobei die mobile Fernwartungseinheit (3) ferner eine Mensch-Maschine-Schnittstelle (15) aufweist,
und wobei über das Kommunikationsnetzwerk (4), zwischen der Kommunikationsschnittstelle (9) der Fernwartungseinheit (3) und der Kommunikationsgegenstelle (5), eine Datenverbindung (10) besteht,
und wobei an der zu wartenden technischen Vorrichtung (2) ein kontaktlos auslesbarer Datenspeicher (11) hinterlegt ist,
und wobei die mobile Fernwartungseinheit (3) ein Auslesemittel (14) zum Auslesen des Datenspeichers (11) aufweist,
**dadurch gekennzeichnet, dass**
im Datenspeicher (11) Konfigurationsdaten (12) der Kommunikationsschnittstelle (9) und Konfigurationsdaten (13) der Kommunikationsgegenstelle (5) hinterlegt sind,
und dass die Konfigurationsdaten der Kommunikationsschnittstelle (9) als zumindest eines der Gruppe Netzwerkkennung, Benutzername, Kennwort, Netzwerkparameter, VPN-Parameter ausgebildet sind.

2. Fernwartungssystem nach Anspruch 1, **dadurch gekennzeichnet, dass** der Datenspeicher (11) als optisch auslesbarer 2D-Code ausgebildet ist.

3. Fernwartungssystem nach Anspruch 1, **dadurch gekennzeichnet, dass** der Datenspeicher (11) als per Funk auslesbares Codeelement ausgebildet ist.

4. Fernwartungssystem nach einem der Ansprüche 1 bis 3, **dadurch gekennzeichnet, dass** die Datenverbindung (10) als eine Paket-Netzverbindung ausgebildet ist.

5. Fernwartungssystem nach einem der Ansprüche 1 bis 4, **dadurch gekennzeichnet, dass** die mobile Fernwartungseinheit (3) mit einer, vom Bediener der Fernwartungseinheit (3) getragenen, audio-visuellen Ein-Ausgabevorrichtung verbunden ist.

6. Fernwartungssystem nach Anspruch 5, **dadurch gekennzeichnet, dass** die audio-visuelle Ein-Ausgabevorrichtung eine Bilderfassungs- und/oder eine Audioerfassungs- und/oder eine Audioausgabevorrichtung aufweist.

7. Fernwartungssystem nach Anspruch 5 oder 6, **dadurch gekennzeichnet, dass** die audio-visuelle Ein-Ausgabevorrichtung ferner eine Bildausgabevorrichtung aufweist.

8. Fernwartungssystem nach einem der Ansprüche 5 bis 7, **dadurch gekennzeichnet, dass** das Auslesemittel (14) durch die Bilderfassungsvorrichtung gebildet ist.

9. Fernwartungssystem nach einem der Ansprüche 3 bis 8, **dadurch gekennzeichnet, dass** das Auslesemittel (14) durch eine Hochfrequenz Sende- und Empfangsvorrichtung gebildet ist.

10. Fernwartungssystem nach einem der Ansprüche 1 bis 9, **dadurch gekennzeichnet, dass** die Konfigurationsdaten zur ausschließlich einmaligen Verwendung ausgebildet sind.

11. Fernwartungssystem nach einem der Ansprüche 1 bis 10, **dadurch gekennzeichnet, dass** in den Konfigurationsdaten zeitliche und/oder Bedienerbezogene Bereichsangaben hinterlegt sind.

12. Fernwartungssystem nach einem der Ansprüche 1 bis 11, **dadurch gekennzeichnet, dass** die im Datenspeicher (11) hinterlegten Konfigurationsdaten verschlüsselt sind.

13. Fernwartungssystem nach Anspruch 12, **dadurch gekennzeichnet, dass** die Konfigurationsdaten mit einem öffentlichen Schlüssel eines public-key Schlüsselpaares verschlüsselt sind, wobei der private Schlüssel im Computersystem (18) der mobilen Fernwartungseinheit (3), insbesondere im nichtflüchtigen Speichermittel (7) oder in einem mit dem Computersystem (18) verbindbaren Speichermittel, hinterlegt ist.

14. Fernwartungssystem nach einem der Ansprüche 1 bis 13, **dadurch gekennzeichnet, dass** mit der Fernwartungseinheit (3) ein Protokollspeicher verbunden ist, wobei die Verbindung gegebenenfalls über das Kommunikationsnetzwerk (4) gebildet ist.

15. Fernwartungssystem nach einem der Ansprüche 1 bis 13, **dadurch gekennzeichnet, dass** an der zu wartenden bzw. zu bedienenden technische Vorrichtung (2) ein kontaktlos beschreibbarer Protokollspeicher angeordnet ist.

16. Konfigurationsverfahren einer mobilen Fernwartungseinheit (3), in einem Fernwartungssystem (1) nach einem der Ansprüche 1 bis 15,
umfassend die Schritte:
Ausrichten des Auslesemittels (14) der mobilen Fernwartungseinheit (3) auf den Datenspeicher (11) durch den Bediener und Aktivieren des Auslesemittels; (14)
Auslesen der Konfigurationsdaten aus dem Datenspeicher; (11)
Konfigurieren der Kommunikationsschnittstelle (9) der mobilen Fernwartungseinheit (3) mit den ausgelesenen Konfigurationsdaten der Datenverbindung; (10)
Darstellen eines Datensatzes (20) der Konfigurationsdaten der Kommunikationsgegenstelle (5) an der Mensch-Maschine-Schnittstelle; (15)
Auswahl des Datensatzes (20) der Kommunikationsgegenstelle (5) an der Mensch-Maschine-Schnittstelle (15) durch den Bediener;
Konfigurieren der Kommunikationsschnittstelle (9) der mobilen Fernwartungseinheit (3) mit den Konfigurationsdaten der ausgewählten Kommunikationsgegenstelle; (5)
Aufbau der Datenverbindung (10) zwischen der Kommunikationsschnittstelle (9) der mobilen Fernwartungseinheit (3) und der Kommunikationsgegenstelle; (5)
Übertragen von Audio- und/oder Visuellen-Informationspaketen (22) zwischen der Kommunikationsgegenstelle (5) und der Fernwartungseinheit (3), insbesondere Darstellung und/oder Erfassung an der Mensch-Maschine-Schnittelle.

17. Konfigurationsverfahren nach Anspruch 16, **dadurch gekennzeichnet, dass** nach Ende der Fernwartung, die Datenverbindung (10) abgebaut und die Konfigurationsdaten aus der Fernwartungseinheit (3) gelöscht werden.

18. Konfigurationsverfahren nach Anspruch 16 oder 17, **dadurch gekennzeichnet, dass** ein Zugriff des Bedieners auf die in der Fernwartungseinheit (3) hinterlegten Konfigurationsdaten durch Zugriffsbeschränkungen verunmöglicht wird.

19. Konfigurationsverfahren nach einem der Ansprüche 16 bis 18, **dadurch gekennzeichnet, dass** beim Ausrichteschritt die Fernwartungseinheit (3) vom Bediener in einen Nahbereich des Datenspeichers (11) bewegt wird.

20. Konfigurationsverfahren nach einem der Ansprüche 16 bis 19, **dadurch gekennzeichnet, dass** die ausgelesenen Konfigurationsdaten mit dem im Speichermittel (7) der Fernwartungseinheit (3) hinterlegten privaten Schlüssel entschlüsselt werden.

21. Konfigurationsverfahren nach einem der Ansprüche 16 bis 20, **dadurch gekennzeichnet, dass** zumindest vor dem Aufbau der Datenverbindung (10) eine Authentifizierung des Bedieners der Fernwartungseinheit (3) durchgeführt wird.

22. Konfigurationsverfahren nach Anspruch 21, **dadurch gekennzeichnet, dass** eine Kennung des authentifizierten Benutzers im Protokollspeicher abgelegt wird.

23. Konfigurationsverfahren nach einem der Ansprüche 16 bis 22, **dadurch gekennzeichnet, dass** zumindest ein Teil der übertragenen von Audio- und/oder Visuellen-Informationspakete (22) im Protokollspeicher abgelegt werden.

24. Konfigurationsverfahren nach einem der Ansprüche 16 bis 23, **dadurch gekennzeichnet, dass** über die Datenverbindung (10) Sensor- und/oder Aktordaten übertragen werden.

## Claims

1. A remote monitoring system (1) comprising
a technical device (2) to be maintained or operated,
a mobile remote maintenance unit (3),
a communications network (4),
and at least one communications remote station (5),
wherein the remote maintenance unit (3) comprises a computer system (18) designed for mobile operation and at least one main processor (6), volatile and non-volatile storage means (7), a sensor interface (8) and a communications interface (9),
and wherein, further, the mobile remote maintenance unit (3) has a human-machine interface (15),
and wherein a data connection (10) between the communications interface (9) of the remote maintenance unit (3) and the communications remote station (5) exists via the communications network (4),
and wherein a contactlessly readable data memory (11) is provided on the technical device (2) to be maintained,
and wherein the mobile remote maintenance unit (3) has a reading means (14) for reading out the data memory (11),
**characterized in that**
configuration data (12) of the communications interface (9) and configuration data (13) of the communications remote station (5) are stored in the data memory (11),
and that the configuration data of the communications interface (9) are designed as at least one of the group comprising network identifier, user name, password, network parameters and VPN parameters.

2. The remote maintenance system according to claim 1, **characterized in that** the data memory (11) is designed as optically readable 2D code.

3. The remote maintenance system according to claim 1, **characterized in that** the data memory (11) is designed as a wirelessly readable code element.

4. The remote maintenance system according to one of claims 1 to 3, **characterized in that** the data connection (10) is designed as a packet network connection.

5. The remote maintenance system according to one of claims 1 to 4, **characterized in that** the mobile maintenance unit (3) is connected to an audio-visual input-output device carried by the operator of the remote maintenance unit (3).

6. The remote maintenance system according to claim 5, **characterized in that** the audio-visual input-output device has an image capturing and/or an audio capturing and/or an audio output device.

7. The remote maintenance system according to claim 5 or 6, **characterized in that**, furthermore, the audio-visual input-output device has an image output device.

8. The remote maintenance system according to one of claims 5 to 7, **characterized in that** the reading means (14) is formed by the image capturing device.

9. The remote maintenance system according to one of claims 3 to 8, **characterized in that** the reading means (14) is formed by a high-frequency transmitting and receiving device.

10. The remote maintenance system according to one of claims 1 to 9, **characterized in that** the configuration data are designed for exclusively one-off use.

11. The remote maintenance system according to one of claims 1 to 10, **characterized in that** time-related and/or operator-related range information is stored in the configuration data.

12. The remote maintenance system according to one of claims 1 to 11, **characterized in that** the configuration data stored in the data memory (11) are encrypted.

13. The remote maintenance system according to claim 12, **characterized in that** the configuration data are encrypted with a public key of a public-key key pair, wherein the private key is stored in the computer system (18) of the mobile remote maintenance unit (3), in particular in the non-volatile storage means (7) or in a storage means which can be connected to the computer system (18).

14. The remote maintenance system according to one of claims 1 to 13, **characterized in that** a protocol memory is connected to the remote maintenance unit (3), wherein the connection is possibly formed by the communications network (4).

15. The remote maintenance system according to one of claims 1 to 13, **characterized in that** a contactlessly writable protocol memory is arranged at the technical device (2) to be maintained or operated.

16. A configuration method of a mobile remote maintenance unit (3) in a remote maintenance system (1) according to one of claims 1 to 15, comprising the following steps:
Alignment of the reading means (14) of the mobile remote maintenance unit (3) with the data memory (11) by the operator and activation of the reading means (14);
Reading of the configuration data from the data memory (11);
Configuration of the communications interface (9) of the mobile remote maintenance unit (3) with the read-out configuration data of the data connection (10);
Display of a data record (20) of the configuration data of the communications remote station (5) at the human-machine interface (15);
Selection of the data record (20) of the communications remote station (5) at the human-machine interface (15) by the operator;
Configuration of the communications interface (9) of the mobile remote maintenance unit (3) with the configuration data of the selected communications remote station (5);
Establishment of the data connection (10) between the communications interface (9) of the mobile remote maintenance unit (3) and the communications remote station (5);
Transmission of audio and/or visual information packets (22) between the communications remote station (5) and the remote maintenance unit (3), in particular display and/or recording at the human-machine interface.

17. The configuration method according to claim 16, **characterized in that**, on completion of the remote maintenance, the data connection (10) is dismantled and the configuration data are deleted from the remote maintenance unit (3).

18. The configuration method according to claim 16 or 17, **characterized in that** access by the operator to the configuration data stored in the remote maintenance unit (3) is made impossible by means of access restrictions.

19. The configuration method according to one of claims 16 to 18, **characterized in that**, in the alignment step, the remote maintenance unit (3) is moved by the operator into the vicinity of the data memory (11).

20. The configuration method according to one of claims 16 to 19, **characterized in that** the read-out configuration data are decrypted with the private key stored in the storage means (7) of the remote maintenance unit (3).

21. The configuration method according to one of claims 16 to 20, **characterized in that**, at least before establishing the data connection (10), an authentication of the operator of the remote maintenance unit (3) is carried out.

22. The configuration method according to claim 21, **characterized in that** an identification of the authenticated user is stored in the protocol memory.

23. The configuration method according to one of claims 16 to 22, **characterized in that** at least some of the transmitted audio and/or visual information packets (22) are stored in the protocol memory.

24. The configuration method according to one of claims 16 to 23, **characterized in that** sensor and/or actuator data are transmitted via the data connection (10).

## Revendications

1. Système de maintenance à distance (1) comprenant
un dispositif technique (2) à entretenir ou à contrôler,
une unité de maintenance à distance mobile (3),
un réseau de communication (4),
et au moins un poste de communication distant (5),
l'unité de maintenance à distance (3) comprenant un système informatique (18) conçu pour un fonctionnement mobile et au moins un processeur principal (6), des mémoires volatiles et non volatiles (7), une interface de capteur (8) et une interface de communication (9),
et l'unité de maintenance à distance mobile (3) comprenant en outre une interface homme-machine (15),
et une liaison de données (10) existant par l'intermédiaire du réseau de communication (4), entre l'interface de communication (9) de l'unité de maintenance à distance (3) et le poste de communication distant (5),
et une mémoire de données (11) lisible sans contact étant disposée sur le dispositif technique (2) à entretenir,
et l'unité de maintenance à distance mobile (3) comprenant un moyen de lecture (14) pour la lecture de la mémoire de données (11),
**caractérisé en ce que**
dans la mémoire de données (11) sont enregistrées les données de configuration (12) de l'interface de communication (9) et les données de configuration (13) du poste de communication distant (5),
et **en ce que** les données de configuration de l'interface de communication (9) sont conçues comme au moins un du groupe constitué d'un identifiant réseau, d'un nom d'utilisateur, d'un mot de passe, d'un paramètre de réseau, d'un paramètre VPN.

2. Système de maintenance à distance selon la revendication 1, **caractérisé en ce que** la mémoire de données (11) est conçue comme un code 2D lisible optiquement.

3. Système de maintenance à distance selon la revendication 1, **caractérisé en ce que** la mémoire de données (11) est conçue comme un élément de code lisible par radio.

4. Système de maintenance à distance selon l'une des revendications 1 à 3, **caractérisé en ce que** la liaison de données (10) est conçue comme une liaison réseau par paquets.

5. Système de maintenance à distance selon l'une des revendications 1 à 4, **caractérisé en ce que** l'unité de maintenance à distance mobile (3) est reliée avec un dispositif d'entrée-sortie audiovisuel porté par l'utilisateur de l'unité de maintenance à distance (3).

6. Système de maintenance à distance selon la revendication 5, **caractérisé en ce que** le dispositif d'entrée-sortie audiovisuel comprend un dispositif de capture d'image et/ou un dispositif de capture audio et/ou un dispositif de sortie audio.

7. Système de maintenance à distance selon la revendication 5 ou 6, **caractérisé en ce que** le dispositif d'entrée-sortie audiovisuel comprend en outre un dispositif de sortie d'images.

8. Système de maintenance à distance selon l'une des revendications 5 à 7, **caractérisé en ce que** le moyen de lecture (14) est constitué du dispositif de capture d'image.

9. Système de maintenance à distance selon l'une des revendications 3 à 8, **caractérisé en ce que** le moyen de lecture (14) est constitué d'un dispositif d'émission et de réception à haute fréquence.

10. Système de maintenance à distance selon l'une des revendications 1 à 9, **caractérisé en ce que** les données de configuration sont conçues exclusivement pour une seule utilisation.

11. Système de maintenance à distance selon l'une des revendications 1 à 10, **caractérisé en ce que**, dans les données de configuration, sont enregistrés des indications temporelles et/ou des indications concernant l'utilisateur.

12. Système de maintenance à distance selon l'une des revendications 1 à 11, **caractérisé en ce que** les données de configurations enregistrées dans la mémoire de données (11) sont cryptées.

13. Système de maintenance à distance selon la revendication 12, **caractérisé en ce que** les données de configuration sont cryptées avec une clé publique d'une paire de clés à clé publique, la clé privée étant enregistrée dans le système informatique (18) de l'unité de maintenance à distance mobile (3), plus particulièrement dans la mémoire non volatile (7) ou dans une mémoire pouvant être reliée au système informatique (18).

14. Système de maintenance à distance selon l'une des revendications 1 à 13, **caractérisé en ce que**, avec l'unité de maintenance à distance (3), une mémoire de protocole est reliée, la liaison étant établie le cas échéant par l'intermédiaire du réseau de communication (4).

15. Système de maintenance à distance selon l'une des revendications 1 à 13, **caractérisé en ce que**, sur le dispositif technique (2) à entretenir ou à contrôler, est disposée une mémoire de protocole pouvant être écrite sans contact.

16. Procédé de configuration d'une unité de maintenance à distance mobile (3) dans un système de maintenance à distance (1) selon l'une des revendications 1 à 15, comprenant les étapes suivantes :
orientation du moyen de lecture (14) de l'unité de maintenance à distance mobile (3) vers la mémoire de données (11) par l'utilisateur et activation du moyen de lecture (14) ;
lecture des données de configuration dans la mémoire de données (11) ;
configuration de l'interface de communication (9) de l'unité de maintenance à distance mobile (3) avec les données de configuration lues dans la liaison de données (10) ;
représentation d'un ensemble de données (20) des données de configuration du poste de communication distant (5) sur l'interface homme-machine (15) ;
sélection de l'ensemble de données (20) du poste de communication distant (5) sur l'interface homme-machine (15) par l'utilisateur ;
configuration de l'interface de communication (9) de l'unité de maintenance à distance mobile (3) avec les données de configuration du poste de communication distant (5) sélectionné ;
établissement de la liaison de données (10) entre l'interface de communication (9) de l'unité de maintenance à distance mobile (3) et du poste de communication distant (5) ;
transmission de paquets d'informations audio et/ou visuelles (22) entre le poste de communication distant (5) et l'unité de maintenance à distance (3), plus particulièrement représentation et/ou relevé sur l'interface homme-machine.

17. Procédé de configuration selon la revendication 16, **caractérisé en ce que**, après la fin de la maintenance à distance, la liaison de données (10) est coupée et les données de configuration sont effacées de l'unité de maintenance à distance (3).

18. Procédé de configuration selon la revendication 16 ou 17, **caractérisé en ce qu'**un accès de l'utilisateur aux données de configuration enregistrées dans l'unité de maintenance à distance (3) est rendu impossible par des limitations d'accès.

19. Procédé de configuration selon l'une des revendications 16 à 18, **caractérisé en ce que**, lors de l'étape d'orientation, l'unité de maintenance à distance (3) est déplacée par l'utilisateur à proximité de la mémoire de données (11).

20. Procédé de configuration selon l'une des revendications 16 à 19, **caractérisé en ce que** les données de configuration lues sont décryptées avec la clé privée enregistrée dans la mémoire (7) de l'unité de maintenance à distance (3).

21. Procédé de configuration selon l'une des revendications 16 à 20, **caractérisé en ce que**, au moins avant l'établissement de la liaison de données (10), une authentification de l'utilisateur de l'unité de maintenance à distance (3) est effectuée.

22. Procédé de configuration selon la revendication 21, **caractérisé en ce qu'**une identification de l'utilisateur authentifié est enregistrée dans la mémoire de protocole.

23. Procédé de configuration selon l'une des revendications 16 à 22, **caractérisé en ce qu'**au moins une partie des paquets d'informations audio et/ou visuelles (22) transmis sont enregistrés dans la mémoire de protocole.

24. Procédé de configuration selon l'une des revendications 16 à 23, **caractérisé en ce que**, par l'intermédiaire de la liaison de données (10), des données de capteurs et/ou d'actionneurs sont transmises.
